# EUROPÄISCHE PATENTSCHRIFT

(11) **EP 3 722 189 B1**
(45) Veröffentlichungstag und Bekanntmachung des Hinweises auf die Patenterteilung: **28.12.2022**
(21) Anmeldenummer: 20168917.1
(22) Anmeldetag: 09.04.2020
(51) Int. Cl.: B62D 35/00

(54) **FRONTSPOILERANORDNUNG FÜR EIN KRAFTFAHRZEUG**
FRONT SPOILER ASSEMBLY FOR A MOTOR VEHICLE
AGENCEMENT DE BECQUET AVANT POUR UN VÉHICULE AUTOMOBILE

(30) Priorität: 09.04.2019 DE 102019109371
(43) Veröffentlichungstag der Anmeldung: 14.10.2020
(73) Patentinhaber: Dr.Ing. h.c. F. Porsche Aktiengesellschaft, 70435 Stuttgart (DE); Apollo Tyres Global R&D B.V., 7521 PT Enschede (NL)
(72) Erfinder: DANEV, Dimitar, 71272 Renningen (DE); PAULITSCH, Markus, 76275 Ettlingen (DE); DR. HÖLZEL, Steffen, 71735 Eberdingen (DE); PFISTER, Klaus, 75433 Maulbronn (DE); PEETERS, Mike, 2340 Vlimmeren (BE); KORTE, Gerlof, 7577 NB Oldenzaal (NL); LUTTIKHUIS, Bart Oude, 7575 CG Oldenzaal (NL)
(74) Vertreter: terpatent Patentanwälte ter Smitten Eberlein-Van Hoof Rütten Daubert

(56) Entgegenhaltungen:
- DE-A1- 3 613 301
- DE-A1-102013 016 508
- FR-A1- 2 994 414
- US-A1- 2014 076 645
- US-A1- 2017 334 282
- US-B1- 6 286 893
- US-B2- 9 738 328

## Beschreibung

Die Erfindung betrifft eine Frontspoileranordnung für ein Kraftfahrzeug mit einer sich im Bugbereich des Kraftfahrzeuges zumindest teilweise in Querrichtung des Kraftfahrzeuges erstreckenden Spoilerlippe mit mindestens zwei Spoilerbereichen, die durch mindestens eine Aktuatoreinrichtung getrennt oder gemeinsam von einer eingefahrenen Ruheposition in eine ausgefahrene Spoilerposition überführbar sind.

Frontspoileranordnungen sind aus dem Stand der Technik hinlänglich bekannt. Grundsätzlich reduziert eine im Bugbereich angeordnete Frontspoileranordnung die Menge der unter dem Fahrzeug durchströmenden Luft, verbessert die Umströmung von unverkleideten Fahrwerkgestellen und führt somit zu einer Verringerung des Luftwiderstandes und des Vorderachsauftriebes.

Grundsätzlich ist es, wie beispielsweise in der amerikanischen Patentschrift US 6,286,893 B1 bekannt, einen Frontspoiler verstellbar, hier um eine Horizontalachse verdrehbar, auszuführen, um eine Spoilerstellung an eine vorherrschende Geschwindigkeit anzupassen. Hierbei wird jedoch eine sehr komplex, durch einen Antriebsmotor verstellbare Anordnung offenbart.

Um nun mit Hilfe einer verbesserten Flexibilität der Frontspoileranordnung die Fahrstabilität noch weiter zu verbessern, ist es aus der DE 10 2011 121 538 A1 bekannt, eine Frontspoileranordnung vorzusehen, deren Spoilerlippe mindestens zwei Spoilerbereiche aufweist, die separat verstellbar sind. Ein Nachteil einer derartigen Frontspoileranordnung besteht darin, dass relativ hohe Kräfte durch die Aktuatoreinrichtung aufgebracht werden müssen, um den einen Bereich der Spoilerlippe gegenüber dem anderen Bereich zu verstellen.

Aufgabe der Erfindung ist es daher, den oben genannten Nachteil auf einfache und kostengünstige Weise zu vermeiden.

Die Aufgabe wird dadurch gelöst, dass die einzelnen Spoilerbereiche an einer Vorderseite der Spoilerlippe durch mindestens eine, sich zu einer Spoilerlippenaußenkante erstreckende Vertiefungsform, die als Sicke ausgeführt ist, voneinander getrennt sind, wobei die Spoilerlippenaußenkante vom Bugbereich abgewandt ist. Durch die hierdurch erwirkte, erhöhte Flexibilität in der Übergangszone von zwei unterschiedlich zu betätigenden Spoilerbereichen kann die aufzubringende Betätigungskraft durch die Aktuatoreinrichtung wesentlich verringert werden. Zudem werden auch die unterschiedlichen Spoilerbereiche optisch voneinander getrennt, was designtechnisch erwünscht ist. Die Vertiefungsform kann hierbei grundsätzlich eine Vielzahl von geometrischen Formen annehmen. Auch die Ausrichtung, in welchem Winkel beispielsweise die Vertiefungsform in Richtung der Spoilerlippenaußenkante verläuft, kann in einem bestimmten Bereich frei gewählt werden.

In einer besonders vorteilhaften Ausführungsform erstreckt sich die mindestens eine Vertiefungsform, ausgehend vom Bugbereich, über die gesamte Spoilerlippe. Hierdurch kann sichergestellt werden, dass aufgrund der über die gesamte Breite der Spoilerlippe verlaufende Vertiefungsform lediglich eine geringe Betätigungskraft zur Verstellung eines Spoilerbereiches aufzubringen ist.

In vorteilhafter Weise kann sich die mindestens eine Vertiefungsform in Hoch-Längsrichtung des Kraftfahrzeuges erstrecken. Die Vertiefungsform kann also auch, wenn das aus designtechnischen Gründen gewünscht ist, unter einem bestimmten Winkel zur Hochrichtung des Kraftfahrzeuges verlaufen.

In besonders vorteilhafter Weise kann die Sicke als Trapez-, Wellen- und/oder Halbrundsicke ausgeführt sein.

In einer besonders vorteilhaften Ausführungsform der erfindungsgemäßen Frontspoileranordnung sind zwei äußere und ein mittlerer Spoilerbereich vorgesehen, wobei zumindest die äußeren Spoilerbereiche gemeinsam ein- bzw. auszufahren sind. Abhängig vom Fahrmodus des Kraftfahrzeuges, kann damit zum Einen ein sogenannter CW-Bereich, bei dem der Luftwiderstand und damit der Kraftstoffverbrauch optimiert wird, durch die ausgefahrenen äußeren Spoilerbereiche realisiert werden und zum Anderen ein sogenannter Performance-Modus, bei dem der mittlere Spoilerbereich ausgefahren ist, realisiert werden.

In vorteilhafter Weise ist die Aktuatoreinrichtung als pneumatischer Aktuator ausgeführt. Hierbei ist es vorteilhaft, wenn ein Aktuator für alle Spoilerbereiche vorgesehen ist, wobei eine Ventilanordnung vorgesehen ist, die eine unterschiedliche Ansteuerung der Spoilerbereiche ermöglicht.

Die Erfindung wird anhand einer Zeichnung näher erläutert, hierbei zeigt:
Figur 1 eine Frontansicht eines Bugbereiches eines Kraftfahrzeuges mit einer erfindungsgemäßen Frontspoileranordnung in einem ersten Betriebszustand,
Figur 2 eine perspektivische Frontansicht des Bugbereiches aus Figur 1 mit der erfindungsgemäßen Frontspoileranordnung in einem zweiten Betriebszustand, und
Figuren 3a-d schematische Schnittansichten von möglichen Sickenformen.

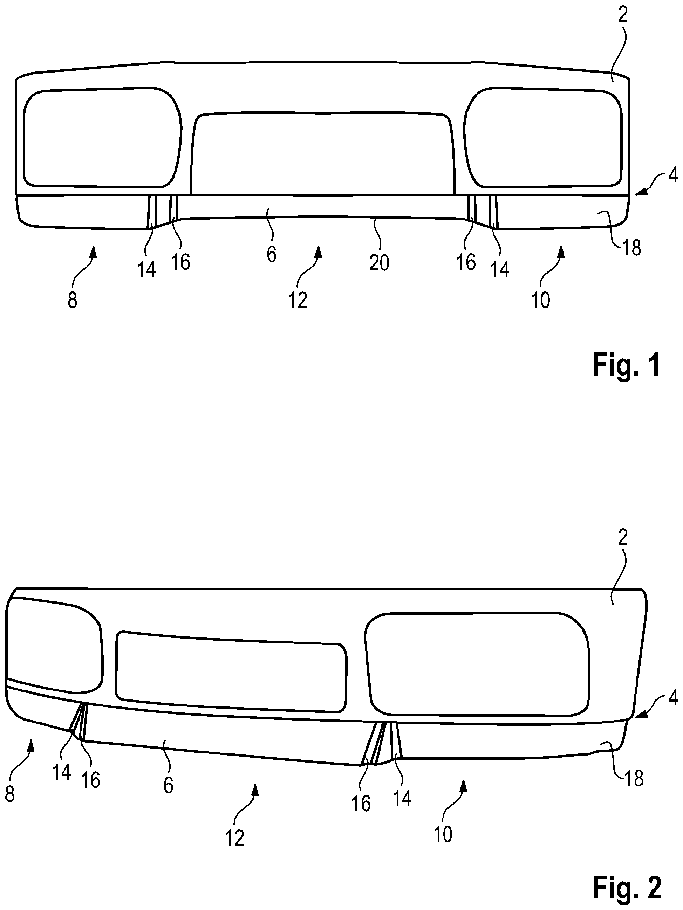

Figur 1 zeigt in einer Frontansicht einen Bugbereich 2 eines nicht weiter dargestellten Kraftfahrzeuges, mit einer sich in Querrichtung des Kraftfahrzeuges und damit des Bugbereiches 2 erstreckenden Frontspoileranordnungen 4, von der hier lediglich eine Spoilerlippe 6 dargestellt ist. Hinsichtlich einer möglichen Ausführung der Frontspoileranordnung 4 und der Beschreibung einer möglichen Aktuatoreinrichtung, wird vollumfänglich auf die deutsche Offenlegungsschrift DE 10 2012 020 739 A1 verwiesen, die einen pneumatischen Aktuator als Aktuatoreinrichtung zum Betätigen der Frontspoilerlippe 6 offenbart.

Die hier gezeigte Frontspoilerlippe 6 weist drei Spoilerbereiche 8, 10 und 12 auf. Hierbei betreffen die Bezugszeichen 8, 10 äußere Spoilerbereiche und das Bezugszeichen 12 betrifft einen dazwischen angeordneten mittleren Spoilerbereich. In der dargestellten Position befinden sich die äußeren Spoilerbereiche 8, 10 im ausgefahrenen Zustand und der mittlere Spoilerbereich 12 im eingefahrenen Zustand. Diese Betriebssituation wird als "CW-Bereich" beschrieben, wobei der Luftwiderstand des Kraftfahrzeuges optimiert wird und somit der Kraftstoffverbrauch des Kraftfahrzeuges gesenkt wird.

Erfindungsgemäß sind nun als Sicken ausgebildete Vertiefungen 14, 16 in der Frontspoilerlippe 6 vorgesehen, die jeweils die äußeren Bereiche 8, 10 vom mittleren Spoilerbereich 12 trennen. Die Vertiefungsformen 14, 16 verlaufen hierbei an einer Vorderseite 18 der Spoilerlippe 6 vom Bugbereich 2 zu einer Spoilerlippenaußenkante 20. Im vorliegenden Ausführungsbeispiel erstrecken sich die Vertiefungsformen 14, 16 also über die gesamte Breite der Spoilerlippe 6. Hierbei erstrecken sich die Vertiefungsformen 14, 16 im Wesentlichen in Hochrichtung der Spoilerlippe 6 und damit des Kraftfahrzeuges, weisen jedoch hierbei einen leicht abgewinkelten Verlauf nach außen auf (siehe hierzu insbesondere Figur 2), was designtechnisch eine dynamische Form erzeugt.

Figur 2 zeigt eine perspektivische Frontansicht der Frontspoileranordnung 4 aus Figur 1 in einem zweiten Betriebszustand, nämlich dem "Performance-Zustand". Hierbei ist der mittlere Spoilerbereich 12 ausgefahren und die äußeren Spoilerbereiche 8, 10 sind eingefahren. Dieser Betriebszustand ist insbesondere für hohe Geschwindigkeiten des Kraftfahrzeuges geeignet.

Es ist natürlich auch möglich, alle drei Spoilerbereiche 8, 10, 12 auszufahren.

Durch die Vertiefungen 14, 16, die die äußeren Spoilerbereiche 8, 10 von dem mittleren Spoilerbereich 12 trennen, kann die Betätigungskraft für die Aktuatoreinrichtung bei der Ausfahrbewegung eines Spoilerbereiches 8, 10, 12 gegenüber einem in Ruheposition verbleibenden Spoilerbereich 8, 10, 12 wesentlich verringert werden.

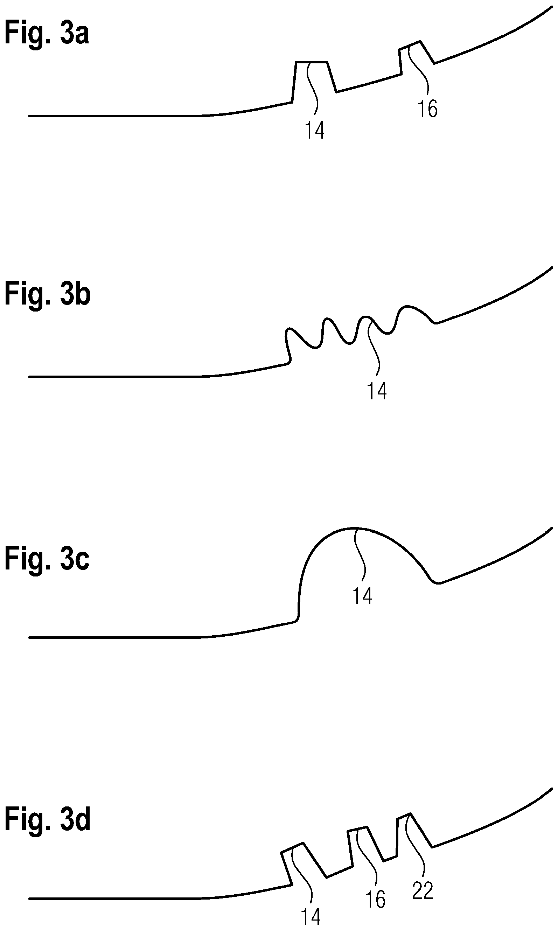

Figur 3 zeigt in einer schematischen Schnittansicht verschiedene Sickenformen, die einzusetzen sind. Hierbei zeigt Figur 3a zwei Trapezsicken 14, 16, Figur 3b eine Wellensicke 14, Figur 3c eine Halbrundsicke 14 und Figur 3d mehrere Trapezsicken 14, 16, 22. Abhängig vom gewünschten Erscheinungsbild können derartige verschiedene Sickenformen eingesetzt werden.

## Patentansprüche

1. Frontspoileranordnung für ein Kraftfahrzeug mit einer sich im Bugbereich (2) des Kraftfahrzeuges zumindest teilweise in Querrichtung des Kraftfahrzeuges erstreckenden Spoilerlippe (6) mit mindestens zwei Spoilerbereichen (8, 10, 12), die durch mindestens eine Aktuatoreinrichtung separat getrennt oder gemeinsam von einer eingefahrenen Ruheposition in eine ausgefahrene Spoilerposition überführbar sind, **dadurch gekennzeichnet, dass** die einzelnen Spoilerbereiche (8, 10, 12) an einer Vorderseite (18) der Spoilerlippe (6) durch mindestens eine, sich zu einer Spoilerlippenaußenkante (20) erstreckende Vertiefungsform (14, 16), die als Sicke ausgeführt ist, voneinander getrennt sind, wobei die Spoilerlippenaußenkante vom Bugbereich (2) abgewandt ist.

2. Frontspoileranordnung nach Anspruch 1, **dadurch gekennzeichnet, dass** sich die mindestens eine Vertiefungsform (14, 16) ausgehend vom Bugbereich (2) über die gesamte Spoilerlippe (6) erstreckt.

3. Frontspoileranordnung nach Anspruch 1 oder 2, **dadurch gekennzeichnet, dass** sich die mindestens eine Vertiefungsform (14, 16) in Hoch-Längsrichtung des Kraftfahrzeuges erstreckt, derart, dass die Vertiefungsform (14, 16) unter einem bestimmten Winkel zur Hochrichtung des Kraftfahrzeuges verläuft.

4. Frontspoileranordnung nach einem der vorhergehenden Ansprüche, **dadurch gekennzeichnet, dass** die Sicke (14, 16) als Trapez-, Wellen- und/oder Halbrundsicke ausgeführt ist.

5. Frontspoileranordnung nach einem der vorhergehenden Ansprüche, **dadurch gekennzeichnet, dass** zwei äußere und ein mittlerer Spoilerbereich (8, 10, 12) vorgesehen sind, wobei zumindest die äußeren Spoilerbereiche (8, 10) gemeinsam ein- bzw. auszufahren sind.

6. Frontspoileranordnung nach einem der vorhergehenden Ansprüche, **dadurch gekennzeichnet, dass** die Aktuatoreinrichtung als pneumatischer Aktuator ausgeführt ist.

7. Frontspoileranordnung nach Anspruch 7, **dadurch gekennzeichnet, dass** ein Aktuator für alle Spoilerbereiche (8, 10, 12) vorgesehen ist, wobei eine Ventilanordnung vorgesehen ist, die eine unterschiedliche Ansteuerung der Spoilerbereiche (8, 10, 12) ermöglicht.

## Claims

1. Front spoiler arrangement for a motor vehicle with a spoiler lip (6) extending at least partially in the transverse direction of the motor vehicle in the front region (2) of the motor vehicle, with at least two spoiler regions (8, 10, 12) which can be transferred separately or together from a retracted idle position into an extended spoiler position by at least one actuator device, **characterised in that** the spoiler regions (8, 10, 12) are separated from each other at a front side (18) of the spoiler lip (6) by at least one recess shape (14, 16) extending to a spoiler lip outer edge (20), wherein the at least one recess shape (14, 16) is designed as a corrugation, and wherein the spoiler lip outer edge faces away from the front region (2).

2. Front spoiler arrangement according to claim 1, wherein the at least one recess shape (14, 16) extends over the entire spoiler lip (6) starting from the front region (2).

3. Front spoiler arrangement according to claim 1 or 2, wherein the at least one recessed shape (14, 16) extends in the upright longitudinal direction of the motor vehicle in such a way that the recess shape (14, 16) extends at a certain angle to the upright direction of the motor vehicle.

4. Front spoiler arrangement according to one of the preceding claims, wherein the corrugation (14, 16) is configured as a trapezoidal, wavy and/or semicircular corrugation.

5. Front spoiler arrangement according to one of the preceding claims, wherein two outer and one middle spoiler regions (8, 10, 12) are provided, wherein at least the outer spoiler regions (8, 10) are to be retracted or extended together.

6. Front spoiler arrangement according to one of the preceding claims, wherein the actuator device is configured as a pneumatic actuator.

7. Front spoiler arrangement according to claim 7, wherein an actuator is provided for all spoiler regions (8, 10, 12), wherein a valve arrangement is provided which enables different actuation of the spoiler regions (8, 10, 12).

## Revendications

1. Agencement de spoiler avant pour un véhicule automobile avec une lèvre de spoiler (6) s'étendant dans la zone avant (2) du véhicule automobile au moins partiellement dans le sens transversal du véhicule automobile avec au moins deux sections de spoiler (8, 10, 12) qui peuvent être séparées séparément ou transférées ensemble par au moins un dispositif d'actionnement d'une position de repos rétractée à une position de spoiler déployée, **caractérisé en ce que** les différentes sections de spoiler (8, 10, 12) sont séparées les unes des autres sur une face avant (18) de la lèvre de spoiler (6) par au moins une forme en creux (14, 16) s'étendant vers un bord extérieur de lèvre de spoiler (20), qui est réalisée sous forme de moulure, le bord extérieur de lèvre de spoiler est détourné de la zone avant (2).

2. Agencement de spoiler avant selon la revendication 1, **caractérisé en ce que** la au moins une forme en creux (14, 16) s'étend sur toute la lèvre de spoiler (6) en partant de la zone avant (2).

3. Agencement de spoiler avant selon la revendication 1 ou 2, **caractérisé en ce que** la au moins une forme en creux (14, 16) s'étend dans la direction longitudinale haute du véhicule automobile, de telle sorte que la forme en creux (14, 16) s'étend sous un certain angle par rapport à la direction haute du véhicule automobile.

4. Agencement de spoiler avant selon l'une des revendications précédentes, **caractérisé en ce que** la moulure (14, 16) est une moulure trapézoïdale, ondulée et/ou semi-circulaire.

5. Agencement de spoiler avant selon l'une des revendications précédentes, **caractérisé en ce que** deux sections de spoiler extérieures et une section de spoiler centrale (8, 10, 12) sont prévues, au moins les sections de spoiler extérieures (8, 10) devant être rétractées ou déployées ensemble.

6. Agencement de spoiler avant selon l'une des revendications précédentes, **caractérisé en ce que** le dispositif d'actionnement est un actionneur pneumatique.

7. Agencement de spoiler avant selon la revendication 7, **caractérisé en ce qu'**un actionneur est prévu pour toutes les sections de spoiler (8, 10, 12), et un agencement de vannes est prévu, qui permet une commande différente des sections de spoiler (8, 10, 12).
